Europäisches Patentamt

European Patent Office

Office européen des brevets

(11) Veröffentlichungsnummer: **0 257 253 B1**

(12) **EUROPÄISCHE PATENTSCHRIFT**

(45) Veröffentlichungstag der Patentschrift: **30.09.92**

(21) Anmeldenummer: **87109758.0**

(22) Anmeldetag: **07.07.87**

(51) Int. Cl.⁵: **G10K  11/16**

(54) **Maschine, insbesondere Verpackungsmaschine.**

(30) Priorität: **24.07.86 DE 3624986**

(43) Veröffentlichungstag der Anmeldung:
**02.03.88 Patentblatt  88/09**

(45) Bekanntmachung des Hinweises auf die
Patenterteilung:
**30.09.92 Patentblatt  92/40**

(84) Benannte Vertragsstaaten:
**DE FR GB IT**

(56) Entgegenhaltungen:
**CH-A- 365 890**
**FR-A- 2 408 889**
**US-A- 2 140 135**
**US-A- 3 376 438**

(73) Patentinhaber: **Focke & Co. (GmbH & Co.)**
**Siemensstrasse 10**
**W-2810 Verden(DE)**

(72) Erfinder: **Focke, Heinz**
**Moorstrasse 64**
**W-2810 Verden(DE)**
Erfinder: **Liedtke, Kurt**
**Trift 18**
**W-2810 Verden(DE)**

(74) Vertreter: **Bolte, Erich, Dipl.-Ing. et al**
**c/o Meissner, Bolte & Partner Patentanwälte**
**Hollerallee 73**
**W-2800 Bremen 1(DE)**

## Beschreibung

Die Erfindung betrifft eine Maschine, insbesondere Verpackungsmaschine, nach den Oberbegriffen der Ansprüche 1 und 6.

Bekanntermaßen sind Maschinen mit beweglichen Maschinenteilen Quellen schallerzeugender Schwingungen. Bisher wurde versucht, derartige Schwingungen durch das Aufbringen von Entdröhnbelägen auf plattenförmigen Maschinenteilen oder durch sogenannte Impedanzsprünge in Form von sprunghaften Querschnittsveränderungen oder den Einbau schockabsorbierender Elemente zu vermeiden.

In der US-A-2 140 135 wird vorgeschlagen, an einer Grundplatte einer Rechenmaschine herausnehmbare Teile anzubringen. Diese bestehen aus einem faserigem Material und sollen die Schallausbreitung in Richtung der Grundplatte der Rechenmaschine verringern.

Nachteilig bei den genannten Maßnahmen ist, daß der Ort der Schalldämpfung zu weit von dem Ort der Schallquelle entfernt ist. Damit ist eine wenig effektive Schalldämpfung verbunden.

Ausgehend von geschilderten Stand der Technik ist es somit Aufgabe der vorliegenden Erfindung, die Entstehung schallerzeugender Schwingungen an feststehenden und beweglichen Maschinenteilen auf ein Mindestmaß zu reduzieren.

Erfindungsgemäß wird diese Aufgabe durch die Merkmale der Ansprüche 1 und 6 gelöst.

Gemäß den Ansprüchen 1 und 6 wird der Schall unmittelbar in dem feststehenden Maschinenteil wirksam gedämpft. Darüber hinaus wird verhindert, daß durch die Körperschallausbreitung weitere Maschinenteile zu Schallschwingungen angeregt werden.

Eine vorteilhafte Wirkung gemäß Anspruch 6 geht von einem als Hohlraum ausgebildeten Maschinenteil aus, das mit flüssigem oder festem schalldämpfenden Werkstoff ausgefüllt ist, z.B. Wasser, Öl oder dergleichen.

Eine vorteilhafte Ausgestaltung der Erfindung gemäß Anspruch 10 ergibt sich, wenn die Maschinenteile aus porösem metallischen Werkstoff, insbesondere Sintermetall, bestehen, wobei die offenen Poren mit dem aushärtbarem schalldämpfenden Werkstoff ausgefüllt sind. Durch die Verwendung derart behandelter gesinterter Maschinenteile kann die Ausbreitung schallerzeugender Schwingungen bereits unmittelbar an ihrem Entstehungsort wirksam verhindert werden. Dadurch können kleinere drehbare Maschinenteile geräuscharm konstruiert werden.

Weitere bevorzugte Ausführungsformen sind den Unteransprüchen zu entnehmen.

Nachstehend werden verschiedene Ausführungsformen der Erfindung anhand der beigefügten Zeichnungen näher erläutert. Es zeigen:

Fig. 1 einen Teil einer Maschine, nämlich eine Wange mit Lageraugen zur Aufnahme von Enden beweglicher Maschinenteile in perspektivischer Darstellung,

Fig. 2 einen Schnitt durch das Maschinenteil gemäß Fig. 1 entlang der Linie II-II in gegenüber der Fig. 1 etwas geänderter Form,

Fig. 3 einen Schnitt durch eine andere Ausführungsform eines Maschinenteils,

Fig. 4 einen Schnitt durch eine Ausführungsform eines Maschinenteils mit Lagerbohrung,

Fig. 5 einen Ausschnitt aus Fig. 4 in stark vergrößerter Darstellung entsprechend dem mit V markierten Kreis.

Schalldämmende oder schalldämpfende Maßnahmen bei Maschinen, insbesondere Verpackungsmaschinen, können einerseits festehende, tragende Maschinenteile, andererseits aber auch bewegliche Maschinenteile, nämlich Hebel, Lenker etc. betreffen.

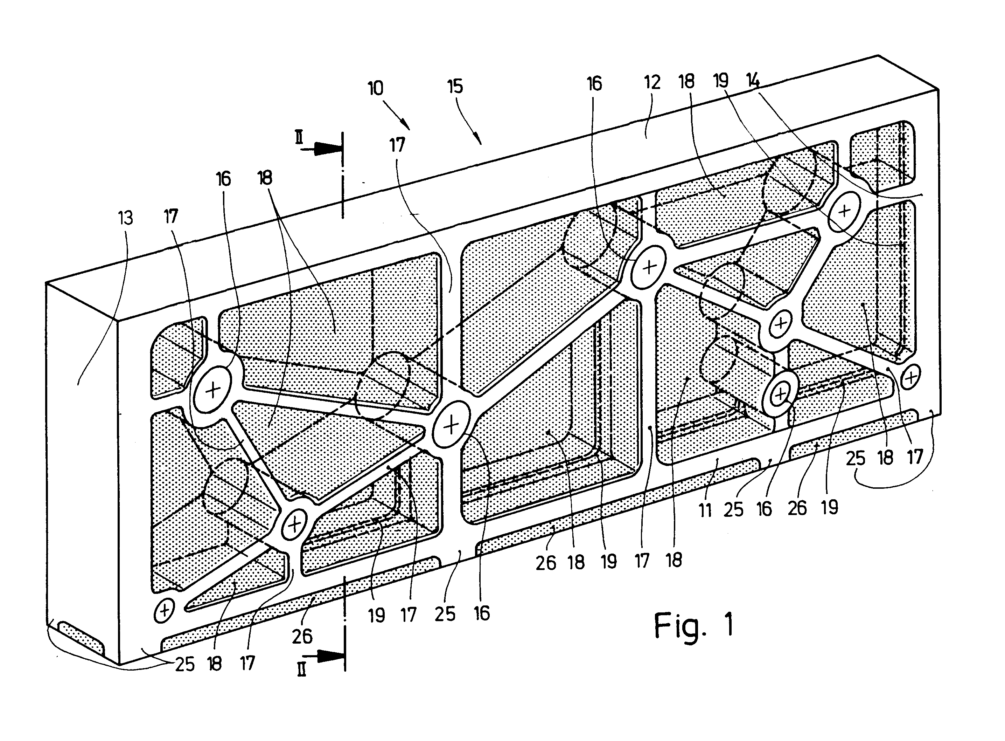

Eine Wange 10 zur Lagerung von Wellen, Zapfen oder dergleichen ist gemäß Fig. 1 als Gittertragwerk ausgebildet. Ein Unterholm 11, ein dazu paralleler Oberholm 12 und letztere miteinander verbindende, aufrechte Seitenholme 13, 14 bilden einen tragenden Rahmen 15. Innerhalb desselben sind Lageraugen zur Aufnahme von hier nicht gezeigten drehenden Maschinenteilen angeordnet. Die Lageraugen 16 sind über Tragstege 17 sowohl untereinander als auch mit dem tragenden Rahmen 15 verbunden. Die Dimensionierung der Tragstege 17 erfolgt insbesondere unter statischen Gesichtspunkten bzw. aufgrund der Belastungen durch die drehenden Maschinenteile, die in den Lageraugen 16 gelagert sind. Aus dem gleichen Grund weisen einzelne Lageraugen 16 auch mehrere Tragstege 17 auf. Die Herstellung des tragenden Rahmens 15 mit Lageraugen 16 und Tragstegen 17 erfolgt vorzugsweise als Gußteil oder wie weiter unten noch genauer ausgeführt wird, als gesintertes Teil.

Zwischen den Tragstegen 17, den Lageraugen 16 und dem tragenden Rahmen 15 sind Zwischenräume 18 vorhanden, die mit einem schalldämmenden oder schalldämpfenden Werkstoff ausgefüllt sind. Letzterer ist in Fig. 1 gepunktet gezeichnet. Günstigerweise ist dieser so ausgewählt, daß sowohl die Erzeugung und Fortpflanzung schallerzeugender Schwingungen (Schalldämmung) innerhalb der Wange 10 als auch das Hindurchtreten von Schallschwingungen (Schalldämpfung) durch die Wange 10 vermieden werden. In einer bevorzugten Ausführungsform sind die Zwischenräume 18 mit einem fließfähigen Kunststoff ausgefüllt, der nach dem Einfüllen aushärtbar ist. Verwendung findet hier z. B. ein Polyurethan-Elastomer.

Um den schalldämpfenden oder schalldämmenden Werkstoff innerhalb der Wange 10 fixieren zu können, sind die Holme 11 bis 14 an ihren Innenseiten mit nach innen ragenden mittigen Rippen 19 versehen. Zur weiteren Verbesserung der Fixierung sind auch die Tragstege 17 mit derartigen Rippen 19 versehen, wobei die Rippen 19 ineinander übergehend angeordnet sind. Da eine Fixierung des schalldämmenden bzw schalldämpfenden Werkstoffs nur in einer Richtung senkrecht zur Hauptausdehnungsrichtung der Wange 10 erforderlich ist, verlaufen die Rippen 19 im wesentlichen parallel zu den Holmen 11 - 14 bzw. den Tragstegen 17. Die Rippen 19 werden von dem schalldämpfenden bzw. schalldämmenden Werkstoff umschlossen, so daß dieser formschlüssig gehalten wird.

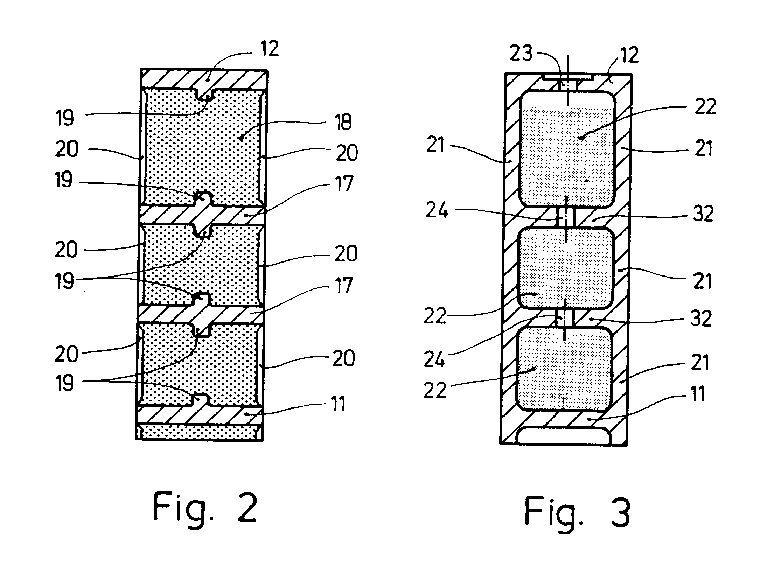

Gemäß Fig. 2 weist die Wange 10 im Schnitt der Linie II-II sowohl an ihrem Oberholm 12 als auch an den Tragstegen 17 und dem Unterholm 11 nach innen gerichtete Rippen 19 auf. Zur Vermeidung eines Kontaktes mit drehbaren Maschinenteilen ersteckt sich der in die Zwischenräume 18 eingefüllte Werkstoff nicht über die gesamte Tiefe des tragenden Rahmens 15 bzw. der Holme 11 - 14. Es bleiben somit Resträume 20 der Zwischenräume 18 unausgefüllt. Dies kann auch dadurch erreicht werden, daß als schalldämmender oder schalldämpfender Werkstoff ein Kunststoff verwendet wird, der beim Aushärten geringfügig schrumpft.

Fig. 3 zeigt eine Alternative. Hier ist ein Maschinenteil, insbesondere eine Wange 10, als Hohlkörper ausgebildet. Durch die Anordnung von - bei dem gezeigten Ausführungsbeispiel - horizontalen Trennwänden 32 werden innerhalb des Maschinenteils mehrere Hohlräume 22 geschaffen, die mit einem schalldämpfenden oder schalldämmenden Werkstoff ausgefüllt sind. Aufgrund der geschlossenen Ausbildung der Hohlräume 22 kann dieser Werkstoff auch eine Flüssigkeit sein, z. B. Wasser, Öl oder dergleichen. Eventuell innerhalb dieses Maschinenteils angeordnete Lager (Lageraugen) sind durch Seitenwände des Maschinenteils abgestützt. Zusätzlich können aber auch bei diesem Maschinenteil der Fig. 3 Tragstege 17 im Sinne des Ausführungsbeispiels nach Fig. 1 und 2 für Lageraugen angeordnet sein.

Der schalldämpfende oder schalldämmende Werkstoff wird über eine obere Einfüllöffnung 23 in das innere des Maschinenteils gebracht. Im Bereich der Trennwände 32 sind Zwischenbohrungen 24 angebracht, um den Übergang des (fließfähigen) Werkstoffs innerhalb von Kammern bzw. Hohlräumen 22 des Maschinenteils zu ermöglichen.

Um eine Übertragung schallerzeugender Schwingungen von dem Maschinenteil (Wange 10) auf ein tragendes Teil der Maschine (Fundament) zu vermeiden, ist bei den Ausführungsbeispielen der Fig. 1 - 3 die Unterseite des Maschinenteils (Wange 10) mit nach unten weisenden Stützen 25 an den Ecken versehen. Dabei gebildete Aussparungen 26 zwischen den Stützen 25 an der Unterseite der Wange 10 sind ebenfalls mit schalldämmendem bzw. schalldämpfendem Werkstoff ausgefüllt. Dieser hat eine schalldämpfende bzw. schalldämmende Wirkung in bezug auf die Übertragung von Schallschwingungen auf Unterkonstruktionen, Fundamente etc.

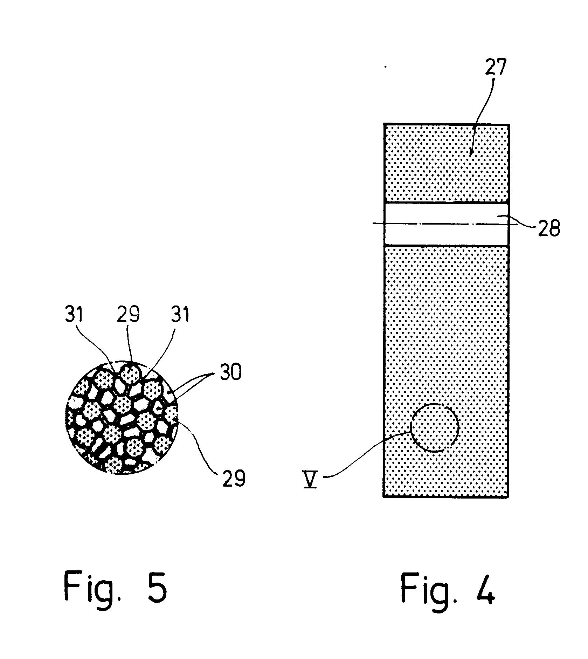

Die Fig. 4 und 5 zeigen eine weitere Ausführungsform eines Maschinenteils. Ähnlich wie in den Fig. 1 bis 3 kann es sich dabei um ein tragendes Maschinenteil oder um ein bewegliches Maschinenteil handeln. Fig. 4 zeigt eine bewegliches Maschinenteil, nämlich einen Lenker, einen Hebel 27 oder dergleichen im Querschnitt. Der Hebel 27 ist mit einer Lagerbohrung 28 versehen. Die Schalldämmung bzw. -dämpfung wird hier dadurch erreicht, daß der Hebel 27 aus einem porösen, metallischen Werkstoff, nämlich aus Sintermetall gefertigt ist. Der Sinterwerkstoff ist dabei durch Einstellen der Parameter Druck, Temperatur und Preßzeit bzw. Schmelzzeit so ausgeführt, daß das Maschinenteil offene Poren 29 zur Aufnahme eines fließfähigen und aushärtbaren schalldämmenden oder schalldämpfenden Werkstoffes aufweist. Die Fertigung des Hebels 27 erfolgt demnach durch Sintern derselben und anschließendem Tränken in einem flüssigen aushärtbaren Kunststoff. Geeignet sind hier sowohl Thermoplaste als auch Duroplaste. Bei Verwendung eines Thermoplastes muß dieser durch Wärme verflüssigt und das gesinterte Maschinenteil in dem Thermoplast getränkt werden. Nach Abkühlung des Maschinenteils ist auch der Thermoplast erstarrt und fest in den Poren 29 verankert. Die Fig. 5 zeigt in stark vergrößerter Darstellung gegenüber der Fig. 4 die Werkstoffstruktur des Hebels 27. Dabei sind die Poren 29 zwischen Metallpartikeln 30 angeordnet. Untereinander sind die Poren 29 durch Kanäle 31 verbunden. Das Tränken des gesinterten Maschinenteils in dem flüssigen schalldämmenden und schalldämpfenden Werkstoff erfolgt unter Vakuum, um Lufteinschlüsse in den Poren zu vermeiden. Der Werkstoff kann somit vollständig in alle vorhandenen Poren 29 und Kanäle 31 eindringen. Das derart gefertigte gesinterte Maschinenteil begrenzt sowohl die Ausdehnung von schallerzeugenden Schwingungen als auch die Verbreitung von bereits erzeugten Schallschwingungen.

Die vorstehend beschriebenen Möglichkeiten für die Verminderung von schallschwingungen bei Maschinenteilen können auch miteinander kombiniert werden. So ist es möglich, Wangen 10 oder andere tragende Maschinenteile in der Ausgestaltung der Fig. 1 bis 3 ebenfalls aus porösem Werkstoff (Sintermetall) zu fertigen, so daß der schallabsorbierende Effekt erhöht wird.

**Patentansprüche**

1. Maschine, insbesondere Verpackungsmaschine, mit wenigstens einem feststehenden, tragenden Maschinenteil (Wange 10), wobei das Maschinenteil (Wange 10) aus einem tragenden Rahmen (15) mit Lageraugen (16) innerhalb des tragenden Rahmens (15) sowie mit Tragstegen (17), die die Lageraugen (16) mit dem tragenden Rahmen (15) verbinden, besteht, **dadurch gekennzeichnet,** daß Zwischenräume (18) innerhalb des Rahmens (15) zwischen den Tragstegen (17) und Teilen des tragenden Rahmens (15) sowie den Lageraugen (16) mit einem schalldämpfenden Werkstoff gefüllt sind.

2. Maschine nach Anspruch 1, dadurch gekennzeichnet, daß die Lageraugen (16) unter Berücksichtigung der auf diese wirkenden Belastungen jeweils durch mehrere Tragstege (17) gehalten sind.

3. Maschine nach Anspruch 1 oder 2, dadurch gekennzeichnet, daß der tragende Rahmen (15) aus miteinander verbundenen Rahmenholmen, insbesondere aus je einem horizontal gerichteten Oberholm (12) und Unterholm (11), die durch zwei aufrechte Seitenholme (13, 14) miteinander verbunden sind, besteht, innerhalb derer die Tragstege (17) angeordnet sind.

4. Maschine nach einem der Ansprüche 1 - 3, dadurch gekennzeichnet, daß das tragende Maschinenteil (Wange 10) an seiner Unterseite (Unterholm 11) nach unten weisende Stützen (25) aufweist, wobei Aussparungen (26) zwischen diesen Stützen (25) mit dem schalldämmenden oder schalldämpfenden Werkstoff ausgefüllt sind, so daß das Maschinenteil nicht mit seiner Unterseite (Unterholm 11), sondern mit den Stützen (25) und dem schalldämmenden oder schalldämpfenden Werkstoff aufliegt.

5. Maschine nach einem der Ansprüche 1 - 4, dadurch gekennzeichnet, daß der Rahmen (15) und/oder die Tragstege (17) bzw. die Lageraugen (16) Nasen, Vorsprünge, Rippen (19) oder dgl. aufweisen zur Fixierung des schalldämmenden oder schalldämpfenden Werkstoffes in den Zwischenräumen (18).

6. Maschine, insbesondere Verpackungsmaschine, mit wenigstens einem feststehenden, tragenden Maschinenteil (Wange 10), dadurch gekennzeichnet, daß das Maschinenteil (Wange 10) als Hohlraum ausgebildet und dieser durch längs- oder quergerichtete Trennwände (32) unterteilt ist, wobei die Hohlräume (22) mit einem schalldämpfenden Werkstoff, insbesondere einer Flüssigkeit, gefüllt sind.

7. Maschine nach Anspruch 6, dadurch gekennzeichnet, daß die Hohlräume (22) untereinander durch Zwischenbohrungen (24) in Verbindung stehen.

8. Maschine nach Anspruch 6 oder 7, dadurch gekennzeichnet, daß das Maschinenteil (Wange 10) mit einer Einfüllöffnung (23) zum Einfüllen des (fließfähigen) schalldämmenden oder schalldämpfenden Werkstoffs versehen ist.

9. Maschine nach einem der Ansprüche 1 - 8, dadurch gekennzeichnet, daß die Zwischenräume (18) bzw. Hohlräume (22) mit einem zum Einführen in diese fließfähigen Kunststoff, der nach dem Einführen aushärtbar ist, insbesondere einem Polyurethan-Elastomer, ausgefüllt sind.

10. Maschine nach einem der Ansprüche 1 bis 9, dadurch gekennzeichnet, daß die Maschinenteile, insbesondere Lenker, Hebel und dergleichen, aus porösem metallischen Werkstoff bestehen, insbesondere aus Sintermetall, wobei offene Poren (29) des metallischen Werkstoffs mit einem aushärtbaren schalldämpfenden Werkstoff ausgefüllt sind, insbesondere mit Kunststoff.

11. Maschine nach Anspruch 10, dadurch gekennzeichnet, daß die offenen Poren (29) des gesinterten Maschinenteils (Hebel 27) durch Tränken in einem flüssigen aushärtbaren Kunststoff, insbesondere in einem Polyurethan-Elastomer, ausgefüllt sind.

12. Maschine nach Anspruch 10 oder 11, dadurch gekennzeichnet, daß das gesinterte Maschinenteil unter erhöhter Temperatur in einem unter Erwärmung verflüssigten Werkstoff getränkt und der Werkstoff während des Abkühlens erstarrt ist.

13. Maschine nach einem der Ansprüche 10 - 12 dadurch gekennzeichnet, daß das Tränken des gesinterten Maschinenteils im Vakuum erfolgt ist.

**Claims**

1. Machine, especially packaging machine, with at least one stationary, supporting machine part (cheek 10), the machine part (cheek 10) consisting of a supporting frame (15) having bearing lugs (16) within the supporting frame (15) and having supporting webs (17) connecting the bearing lugs (16) to the supporting frame (15), characterised in that interspaces (18) within the frame (15) between the supporting webs (17) and parts of the supporting frame (15) as well as the bearing lugs (16) are filled with a sound-damping material.

2. Machine according to Claim 1, characterised in that the bearing lugs (16) are each hold by means of several supporting webs (17) in accordance with the loads exerted on them.

3. Machine according to Claim 1 or 2, characterised in that the supporting frame (15) consists of interconnected frame spars, especially of a top spar (12) and a bottom spar (11) each directed horizontally and connected to one another by means of two vertical side spars (13, 14), within which the supporting webs (17) are arranged.

4. Machine according to one of Claims 1 to 3, characterised in that the supporting machine part (cheek 10) has stays (25) pointing downwards on its underside (bottom spar 11), recesses (26) between these stays (25) being filled with the sound-proofing or sound-damping material, so that the machine part stands not on its underside (bottom spar 11), but on the stays (25) and the sound-proofing or sound-damping material.

5. Machine according to one of Claims 1 to 4, characterised in that the frame (15) and/or the supporting webs (17) or the bearing lugs (16) have noses, projections, ribs (19) or the like, for fixing the sound-proofing or sound-damping material in the interspaces (18).

6. Machine, especially packaging machine, with at least one stationary, supporting machine part (cheek 10), characterised in that the machine part (cheek 10) is designed as a cavity and this is subdivided by means of longitudinally or transversely directed partition walls (32), the cavities (22) being filled with a sound-damping material, especially a liquid.

7. Machine according to Claim 6, characterised in that the cavities (22) communicate with one another by means of intermediate bores (24).

8. Machine according to Claim 6 or 7, characterised in that the machine part (cheek 10) is equipped with a filling orifice (23) for introducing the (flowable) sound-proofing or sound-damping material.

9. Machine according to one of Claims 1 to 8, characterised in that the interspaces (18) or cavities (22) are filled with a plastic which is flowable for introduction into these and which is hardenable after introduction, especially a polyurethane elastomer.

10. Machine according to one of Claims 1 to 9, characterised in that the machine parts, especially links, levers and the like, consist of a porous metallic material, especially of sintered metal, the open pores (29) of the metallic material being filled with a hardenable sound-damping material, especially with plastic.

11. Machine according to Claim 10, characterised in that the open pores (29) of the sintered machine part (lever 27) are filled by being immersed in a liquid hardenable plastic, especially in a polyurethane elastomer.

12. Machine according to Claim 10 or 11, characterised in that the sintered machine part is immersed, at increased temperature, in a material liquefied under heating, and the material solidifies during cooling.

13. Machine according to one of Claims 10 to 12, characterised in that the immersion of the sintered machine part takes place in a vacuum.

**Revendications**

1. Machine, en particulier empaqueteuse, comportant au moins une pièce fixe portante (flasque 10), cette pièce de machine (flasque 10) étant constituée d'un cadre portant (15) comportant des piliers (16) à l'intérieur et des entretoises de support (17) qui réunissent ces paliers (16) au cadre portant (15), caractérisée par le fait que des espaces libres (18) situés à l'intérieur du cadre (15) entre les entretoises de support (17) et les parties du cadre portant (15) ainsi que les paliers (16) sont remplis d'un matériau amortissant le son.

2. Machine selon la revendication 1, caractérisée par le fait que les paliers (16) sont, eu égard aux charges agissant sur eux, tenus chacun par plusieurs entretoises de support (17).

3. Machine selon l'une des revendications 1 et 2, caractérisée par le fait que le cadre portant (15) est constitué de poutres assemblées, en particulier d'une poutre supérieure (12) et d'une poutre inférieure (11) horizontales réunies par deux poutres latérales verticales (13, 14), à l'intérieur desquelles sont placées les entretoises de support (17).

4. Machine selon l'une des revendications 1 à 3, caractérisée par le fait que sa pièce portante (flasque 10) présente, sur sa face inférieure (poutre inférieure 11), des appuie dirigés vers le bas (25), des évidements (26) situés entre ces appuis (25) étant remplis du matériau arrêtant ou amortissant le son, de sorte que la pièce de machine repose non pas par sa face inférieure (poutre inférieure 11), mais par les appuie (25) et le matériau arrêtant ou amortissant le son.

5. Machine selon l'une des revendications 1 à 4, caractérisée par le fait que le cadre (15) et/ou les entretoises de support (17) ou les paliers (16) présentent des ergots, des saillies, des nervures (19) ou dos éléments semblables pour la fixation du matériau arrêtant ou amortissant le son dans les espaces libres (18).

6. Machine, en particulier empaqueteuse, comportant au moins une pièce fixe portante (flasque 10), caractérisée par le fait que cette pièce de machine (flasque 10) est constituée d'une cavité et celle-ci est divisée par des cloisons dirigées longitudinalement ou transversalement (32), les cavités (22) étant remplies d'un matériau amortissant le son, en particulier d'un liquide.

7. Machine selon la revendication 6, caractérisée par le fait que les cavités (22) communiquent par des trous intermédiaires (24).

8. Machine selon l'une des revendications 6 et 7, caractérisée par le fait que sa pièce en question (flasque 10) est pourvue d'un orifice de remplissage (23) pour l'introduction du matériau (fluide) arrêtant ou amortissant le son.

9. Machine selon l'une des revendications 1 à 8, caractérisée par le fait que les espaces libres (18) ou les cavités (22) sont remplis d'une matière plastique, fluide pour son introduction dans ceux-ci et pouvant durcir après son introduction, en particulier d'un élastomère en polyuréthanne.

10. Machine selon l'une des revendications 1 à 9, caractérisée par le fait que ses pièces, en particulier bielles, leviers et éléments analogues, sont en matériau métallique poreux, en particulier en métal fritté, des pores ouverts (29) de ce matériau métallique étant remplis d'un matériau durcissable amortissant le son, en particulier de matière plastique.

11. Machine selon la revendication 10, caractérisés par le fait que les pores ouverts (29) de la pièce de machine frittée (levier 27) sont remplis par imprégnation dans une matière plastique liquide durcissable, en particulier dans un élastomère en polyuréthanne.

12. Machine selon la revendication 10 ou 11, caractérisée par le fait que la pièce de machine frittée est imprégnée à température élevée dans une matière fluidifiée au chauffage et la matière est solidifiée pendant le refroidissement.

13. Machine selon l'une des revendications 10 - 12, caractérisée par le fait que l'imprégnation de la pièce de machine frittée est effectuée sous vide.

Fig. 1

Fig. 2

Fig. 3

EP 0 257 253 B1

Fig. 5

Fig. 4